# EUROPEAN PATENT APPLICATION

(11) **EP 4 668 750 A1**
(43) Date of publication of application: **24.12.2025**
(21) Application number: 25177854.4
(22) Date of filing: 21.05.2025
(51) Int. Cl.: H04N 19/70, H04N 19/167, H04N 19/33, H04N 19/46

(54) **LAYER BASED METHODS FOR SUB-PICTURE SUPPORT AND REGION OF INTEREST SCALABILITY**

(30) Priority: 21.06.2024 US 202463662853 P
(71) Applicant: Apple Inc., Cupertino, CA 95014 (US)
(72) Inventor: PODBORSKI, Dimitri, Cupertino, 95014 (US); TOURAPIS, Alexandros, Cupertino, 95014 (US); ZHENG, Yunfei, Cupertino, 95014 (US); KUUSELA, Aki, Cupertino, 95014 (US)
(74) Representative: Zacco Denmark A/S

(57) **Abstract**

The present disclosure relates to leveraging media coding processes and syntax elements, which ordinarily would support layer-based coding, to representations of sub-pictures within video. A sub-picture relates to a spatial region of a video that is organized into a logical unit separate from other region(s) of the videos' content. Sub-pictures can be used, for example, to support region of interest scalability with each sub-picture corresponding to a different region of interest. Techniques for indicating, in a coded video bitstream, that spatial layers are used as sub-pictures and providing metadata to specify and interpret the relationships between sub-pictures and their correspondence to a final reconstructed picture are also specified. Moreover, metadata may be revised before delivery to consuming terminals based on information developed about the consuming terminal's capabilities and processing environments.

## Description

### BACKGROUND

The present disclosure relates to media coding applications such as block-based coding, point cloud-based coding, mesh-based coding, and volumetric-based coding, and, in particular, to coding of video information as sub-pictures.

The coding of image regions independently from other regions is a common technique in various video coding standards and specifications, as it can enable different practices such as parallel decoding, enhanced transmission or advanced bitstream splicing operations. For example, the concept of slices, which group coded blocks into independently decoded regions in raster scan order, is used with several MPEG standards such as MPEG-2, H.264/MPEG-4 AVC, and H.265/HEVC. Slices serve multiple purposes: they enhance error resiliency, facilitate parallel processing, and align slice data sizes to match the maximum transmission unit (MTU) sizes common in IP networks. This alignment with MTU sizes also helps to reduce packetization overhead, improving transmission efficiency. Similarly, the H.265/HEVC video coding standard advances this concept through the introduction of tiles. Tiles are defined as rectangular regions, and are primarily aimed at better facilitating parallel encoding and decoding with less compromise in coding performance compared to what was introduced through only the use of slices. There are also concepts of tile groups that allow combinations of rectangular tiles into different shapes.

Slices and tiles can be used together. Furthermore, the specification of motion-constrained tile sets (MCTS) refines the tiling concept by ensuring the complete independence of tiles, thereby permitting the reorganization of different MCTS in the final output, a feature of particular relevance to immersive video applications. The H.266/VVC coding standard continues this trajectory by also employing sub-pictures to achieve analogous functionalities with, however, a cleaner syntax design compared to the use of MCTS information. Spatial subdivision structures such as slices, tiles and subpictures are usually specified in the high-level syntax of the encoding specification, but the mapping of the encoded elements to these subdivision structures is usually specified at the lower levels of the encoding specification syntaxes, which adds complexity when decoders try to access spatial regions directly, as both the high-level and low-level mapping must be taken into account.

At the same time, the high-level syntax of video coding specifications frequently encompasses information that categorizes coding units into so-called layers, typically described as temporal and spatial layers. Such classification is often used in coding specification extensions, promoting scalability in dimensions such as temporal scalability - affecting frame rate - and spatial scalability, which commonly adjusts the resolution or quality of the video signal. Additionally, layering related signaling in the high level syntax is important for conveying multi-view information; for instance, in 3D video applications, the left and right views, views from different angles, and depth and alpha information are allocated to separate spatial layers. This layered architecture not only enhances the versatility and efficiency of video coding specifications but also caters to a wide array of application requirements, from basic error resilience to complex immersive and 3D video experiences.

### BRIEF DESCRIPTION OF THE DRAWINGS

FIG. 1 illustrates a coding/decoding system suitable for use with embodiments of the present disclosure.
FIG. 2 is a block diagram illustrating leveraging of a common layering technique to support sub-picture based coding according to an embodiment of the present disclosure.
FIG. 3 illustrates an exemplary frame partitioned into sub-pictures according to an embodiment of the present disclosure.
FIG. 4 illustrates an exemplary frame partitioned into sub-pictures according to another embodiment of the present disclosure.
FIG. 5(a) illustrates an exemplary frame partitioned into sub-pictures according to an embodiment of the present disclosure; FIGS. 5(b), 5(c), and 5(d) illustrate groups of sub-pictures according to the embodiment.
FIG. 6 illustrates a method according to an embodiment of the present disclosure.
FIG. 7 illustrates a method according to another embodiment of the present disclosure.
FIG. 8 illustrates a coding system according to an embodiment of the present disclosure.
FIG. 9 illustrates a decoding system according to an embodiment of the present disclosure.
FIG. 10 illustrates a coding/decoding system according to an embodiment of the present disclosure.

### DETAILED DESCRIPTION

The present disclosure relates to leveraging coding syntax elements, that ordinarily would support layer-based coding, to representations of sub-pictures within media. A sub-picture relates to a spatial region of a video that is organized into a logical unit separate from other region(s) of the videos' content. Sub-pictures can be used, for example, to support region of interest scalability, with each sub-picture corresponding to a different region of interest. Techniques for indicating, in a coded video bitstream, that spatial layers are used as sub-pictures and providing metadata to specify and interpret the relationships between sub-pictures and their correspondence to a final reconstructed picture are also specified.

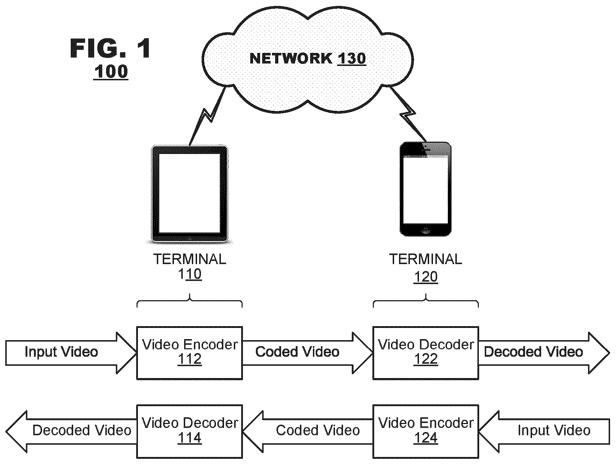

The principles of the present disclosure find application in a media coding and decoding system 100 such as shown in FIG. 1. As illustrated in FIG. 1, a pair of terminal devices 110, 120 may be provided in mutual communication over a network 130. The terminals 110, 120 may exchange coded media either unidirectionally or bidirectionally over the network 130. For a unidirectional video exchange, for example, a first terminal 110 may possess a video encoder 110 that codes input video into a coded representation that is bandwidth-compressed in comparison to the input video. The first terminal 110 may transfer the coded video to the second terminal 120 over the network 130. The second terminal 120 may possess a video decoder 122 that inverts coding operations applied by the video encoder 112 and generates a decoded video stream therefrom. Coding operations may be lossy processes and, therefore, the decoded video may represent the input video from which it is derived but with some loss in information content.

Many unidirectional coding applications involve one to many transfer operations in which a first terminal 110 codes the media once and makes it available for transfer to many other devices (one of which is shown as the second terminal 120). One common technique involves storing coded media at the first terminal 110, for example, a storage system. The consumption device(s) 120 may download portion(s) of the coded media that are suitable for their individual needs. Thus, one consumption device 120 may download the coded media in its entirety. Another consumption device (not shown) may download portions of the coded media relating to a first desired sub-picture to the exclusion of other coded sub-picture(s). A third consumption device (also not shown) may download portions of the coded mediation relation to other desired sub-picture(s) to the exclusion of non-selected sub-picture(s). Further, in embodiments where sub-pictures are coded in multiple coding variants with associated quality levels, the consumption devices may download portions of the coded video corresponding to the desired sub-pictures at the desired quality level. Download requests from the various consumption devices may arrive at the first terminal asynchronously from each other.

For bidirectional video exchange, the coding/decoding process may be repeated for video exchange in the opposite direction, from terminal 120 to terminal 110. In such an implementation, the terminal 120 may possess its own video encoder 124. The video encoder may code a second input video into a coded representation that is bandwidth compressed in comparison to the input video. The second terminal 120 may transfer the second coded video to the first terminal 110 over the network 130. The first terminal 110 may possess a video decoder 114 that inverts coding operations applied by the second video encoder 124 and generates a second decoded video stream therefrom. Again, the coding operations of the second video encoder 124 and the second video decoder 114 may by lossy processes that cause loss of information if the second decoded video were compared to the second input video.

The processing operations performed by the first video encoder 114 and the first video decoder 122 may be performed independently of the processing operations performed by the second video encoder 124 and the second video decoder 114.

The terminals 110, 120 may operate according to a coding protocol that defines candidate coding processes that may be performed on input video (usually, by specifying the decoding processes that are to be performed to invert them) and a syntax by which selections of coding processes and the coded video generated therefrom are represented. As discussed, the coding specifications may represent coded media according to block-based coding, point cloud-based coding, mesh-based coding, or volumetric-based coding techniques.

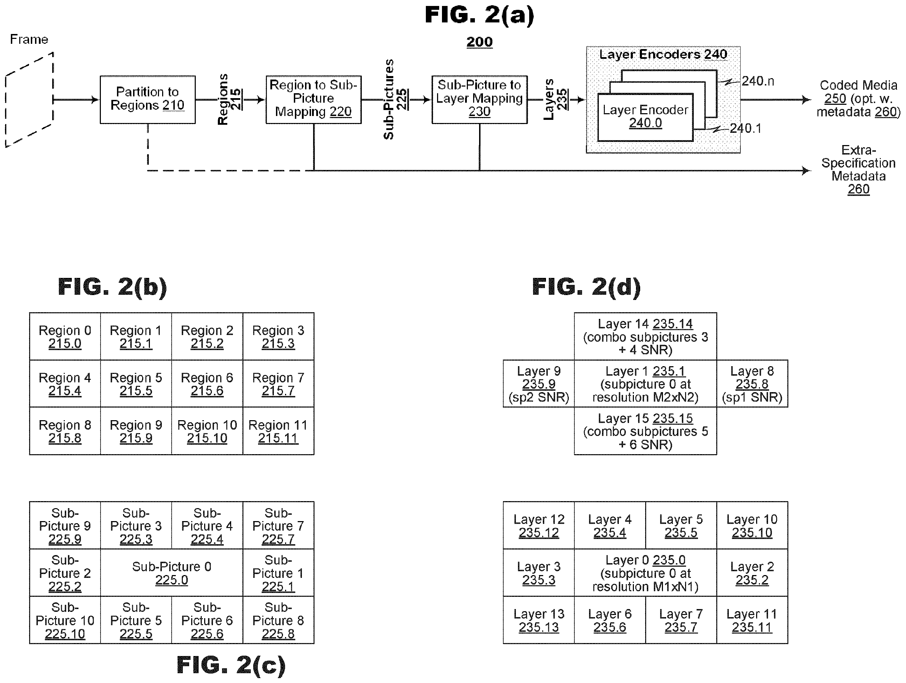

FIG. 2(a) is a block diagram of a processing system 200 for developing sub-pictures according to an embodiment of the present disclosure. The processing system 200 processes frames of source media and generates coded media 250 therefrom. The system 200 illustrated in FIG. 2 is shown working cooperatively with processes of legacy video coding systems that do not natively support definition of sub-pictures and assignments of sub-pictures to coding layers; in such applications the system 200 may generate metadata 260 to be transmitted outside of the system's coding syntax representing such definitions and assignments. In an application where a coding system 200 natively supports definitions of sub-pictures an assignments of those sub-pictures to coding layers, it is expected that coding syntax will accommodate metadata information representing such definitions and assignments and an external metadata stream 260 can be omitted. Except where noted expressly, the following discussion of metadata 260 does not distinguish between metadata provided externally of the coding syntax and metadata provided internally of the coding syntax.

As shown in FIG. 2(a), the processing system 200 may include processing stages 210-230 that partition frames into regions (stage 210), map regions to sub-pictures (stage 220) and map sub-pictures to layers (stage 230). The processing system 200 also may include one or more layer encoders 240 to code content of layers so assigned according to the coding processes and protocols of the coding specification to which the system 200 adheres.

As discussed, in the first stage 210, frames may be partitioned into regions 215. An exemplary partitioning is shown in FIG. 2(b). In this example, frames are partitioned into spatially distinct regions 215.0-215.11. Partitioning of frames into spatially-distinct regions is a common process of many coding specifications. In such embodiments, the system 200 may work cooperatively with partitioning techniques of those coding specifications and process regions 215 that are generated from those techniques via the stages 220 and 230.

In stage 220, a processing system 200 may map regions to sub-pictures. Sub-pictures are portions of frames that are identified for individualized coding by layer encoders 240. Sub-picture identification may be performed in a variety of ways. For example, a processing system 200 may assign a portion of frames that are estimated to be of high interest to viewers to a common sub-picture. Frames may be estimated to possess several distinct regions of interest; in such instances, different regions of interest may be assigned to different sub-pictures. When the stage 220 maps regions to sub-pictures, it may generate metadata identifying the sub-pictures, typically, by assigning an identifier to the sub-picture and identifying the sub-picture's position within the frame. FIG. 2(c) illustrates an exemplary set of eleven sub-pictures 225.0-225.10 drawn from the regions 215.0-215.11 of FIG. 2(b). This example illustrates a use case in which a first sub-picture 225.0 occupies a space formed from regions 215.5 and 215.6 of FIG. 2(b). In this example, the other regions 215.0-215.4 and 215.7-215.11 are mapped to corresponding sub-pictures on a one-to-one basis. As illustrated, the sub-pictures' identifiers need not have any predetermined relationship to the regions' identifiers; the stage 220 may provide metadata 260 that identifies the sub-pictures' assignments to regions.

In stage 230, the processing system 200 may map sub-pictures to layers and provide data from each layer to a corresponding layer encoder 240. The stage 230 may provide metadata 260 that identifies the coding layers to which the layer data was assigned. FIG. 2(d) illustrates an exemplary mapping between the sub-pictures of FIG. 2(c) and a of layers 235.0-235.15. As illustrated, a sub-picture 0 (225.0) from FIG. 2(c) may be mapped to two coding layers 0 and 1 (235.0, 235.1). Layer 0 may represent the sub-picture 225.0 content at a first resolution and layer 1 may represent the sub-picture 225.0 at a second resolution. FIG. 2(d) also illustrates an example in which sub-pictures 1 and 2 (FIG. 2(c)) each are coded in two layers. Sub-picture 1 225.1 is shown as assigned to layers 2 and 8 (235.2, 235.8) and sub-picture 2 225.2 is shown as assigned to layers 3 and 9 (235.3, 235.9); in this example, layers 8 and 9 (235.8, 235.9) provide quality/SNR (signal-to-noise) scalability over the layers 2 and 3 (235.2, 235.3).

The example of FIG. 2(d) also illustrates a use case in which sub-pictures 3-6 (225.3-225.6 in FIG. 2(c)) are mapped to multiple layers 4-7, 14, and 15 (235.4-235.7, 235.14, and 235.15) for coding. In this example, sub-pictures 3-6 each are mapped to layers 4-7 individually. Sub-pictures 3 and 4 also are mapped to a layer 14 as a combination, and sub-pictures 5 and 6 are mapped to a layer 15 as another combination. Layers 14 and 15 may provide SNR scalability over the layers 4-7. Again, the processing stage 230 may provide metadata 260 that identify the relationships between the sub-pictures 225.0-225.10 (FIG. 2(c)) and the layers 235.0-235.15 (FIG. 2(d)) to which they are assigned.

Returning to FIG. 2(a), individual layer encoders 240 may process media content of the layer data (FIG. 2(d)) to which they are assigned. As discussed, each layer encoder 240.1-240.n may process its layer data according to coding protocols defined by a coding specification to which it adheres. The layer encoders 240.1-240.n may apply predictive coding techniques to data and may use coding data generated by other layer encoders 240.1-240.n as may be appropriate under the governing coding specification. The layer encoders 240.1-240.n each may output coded media data, which may be formatted according to syntax protocols of the governing coding specification and made available for consumption by other terminal devices (FIG. 1).

The metadata 260 may contain one or more of the following information elements:
- a layer_id to subpicture_id mapping (in a simple application of sub-pictures, the mapping could be as simple as subpicture=layer);.
- sub-picture positioning in a final rendered frame;
- association between sub-pictures (e.g., grouping of sub-pictures into larger entities);
- scaling information representing scaling to be applied to decoded sub-picture content;
- sub-picture combination information/methodology for overlapping regions (i.e., blending information). This is, for example, useful to do things like a smooth overlay that can even gradually change over time (e.g. fade in an overlay and fade out slowly), or for reducing visible seams that may be otherwise present across sub-picture boundaries.
- Smoothing or other filtering operations to be performed across sub-pictures and sub-picture boundaries prior to their output/display.
Application of the metadata 260 is explained in the following examples.

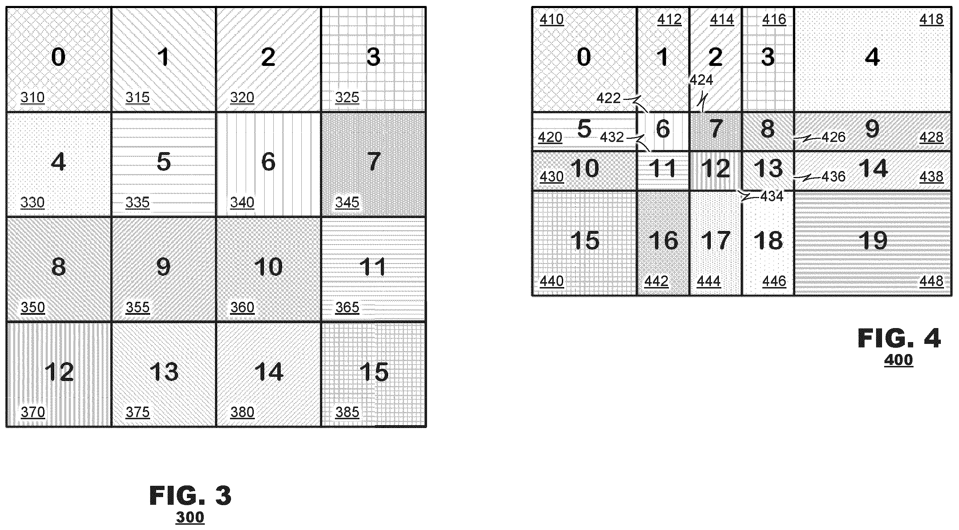

FIG. 3 illustrates exemplary use of sub-pictures according to an embodiment of the present disclosure. In this example, a frame 300 may be partitioned into a plurality of sub-pictures 310-385. This example illustrates a use case in which the sub-pictures 310-385 have a uniform size, and they do not overlap each other spatially. The sub-pictures 310-385 each may be assigned a sub-picture identifier (subpicture_id) that distinguishes the sub-pictures from each other. For example, sub-picture identifiers may be assigned to each sub-picture according to the sub-picture's position in raster scan order. In the example of FIG. 3, metadata 260 (FIG. 2) may identify the number of sub-pictures, for example, by identifying the number as a number of rows and number of columns. The metadata 260 also may identify the sub-pictures' positions within the frame 300. FIG. 3 represents a relatively simple application of sub-pictures to video.

In this application, each sub-picture 310, 315, ..., 385 can be associated with a separate layer id. For example, sub-picture 0 could be associated with a layer with id 0 (FIG. 2), sub-picture 1 could be associated with a layer with id 1 and so on. Sub-pictures 310-385 can coexist with other layer types such as temporal layers, multi-view, quality/SNR, or spatial layers. It is, for example, permissible to have sub-pictures 310 and 315 indicated with layer ids 0 and 1 respectively, while layer ids 2 and 3 indicate SNR or spatial enhancement layers for the same two sub-pictures 310, 315. In this scenario, the layer with id 2 could predict from layer with id 0 and the layer with id 3 could predict from layer with id 1, using scalability coding tools. Metadata 260 may be provided that identifies the relationships between layers and how to identify and use them in rendering. The metadata 200 could be included in normative coding units such as Network Abstraction Layer (NAL) units or Open Bitstream Units (OBUs) that exist in several coding specifications such as AVC, HEVC, VVC, and AV1, or could be present in metadata units such as Supplemental Enhancement Information (SEI) messages or metadata OBUs, among others.

FIG. 4 illustrates exemplary use of sub-pictures according to another embodiment of the present disclosure. In this example, a frame 400 may be partitioned into a plurality of sub-pictures 410-448. This example illustrates a use case in which the sub-pictures 410-448 have non-uniform sizes and they do not overlap each other spatially. The sub-pictures 410-448 each may be assigned a sub-picture identifier (subpicture_id) that distinguishes the sub-pictures from each other. For example, sub-picture identifiers may be assigned to each sub-picture according to the sub-picture's position in raster scan order. In the example of FIG. 4, metadata 260 (FIG. 2) may identify the number of sub-pictures, for example, by identifying the number as a number of rows and number of columns. The metadata 260 also may identify the sub-pictures' positions within the frame 400. The metadata 260 further may identify scaling to be used to scale decoded information of a sub-picture to a size that is appropriate to render the sub-picture.

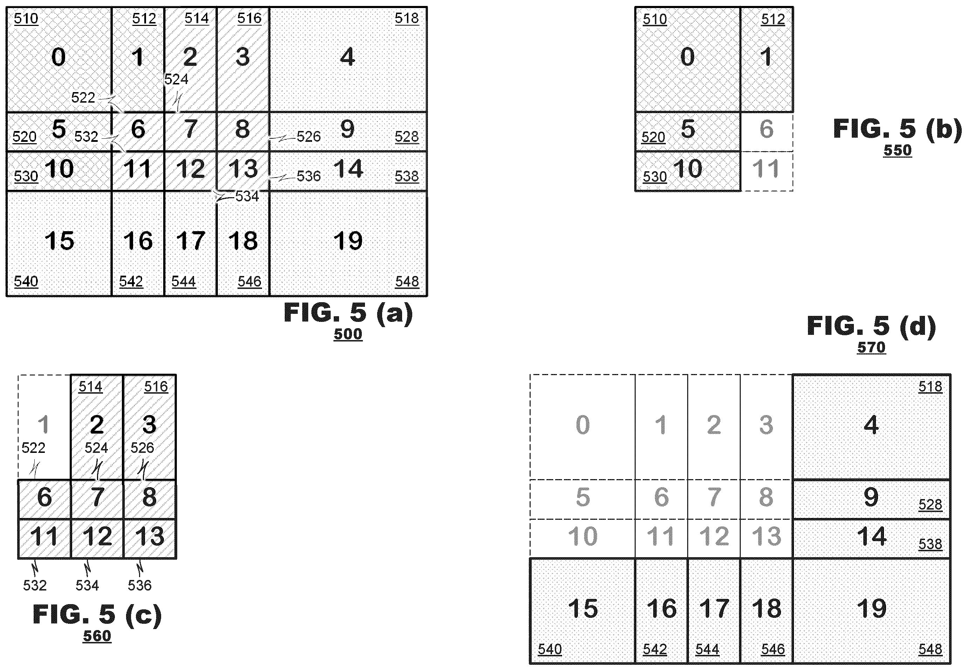

FIGS. 5(a)-(d) illustrate exemplary use of sub-pictures according to a further embodiment of the present disclosure. In this example, a frame 500 may be partitioned into a plurality of sub-pictures 510-548. As in the prior example, the sub-pictures 510-548 are rectangular but they are not uniformly-sized. The sub-pictures 510-548 each may be assigned a sub-picture identifier (subpicture_id) that distinguishes the sub-pictures from each other. This example illustrates a use case in which the sub-pictures 510-548 are grouped together into larger sub-picture groups 550, 560, 570 shown, respectively, in FIGS. 5(b), 5(c), and 5(d). In this embodiment, sub-pictures 510-548 may be assigned group identifiers, as appropriate, that identify which sub-pictures 510-548 are grouped together. In the example of FIG. 5, sub-pictures 510, 512, 520 and 530 belong to a first sub-picture group 550 (FIG. 5 (b)), sub-pictures 514, 516, 522, 524, 526, 532, 534, and 536 belong to a second sub-picture group 560 (FIG 5(c)), and sub-pictures 518, 528, 538, and 540-548 belong to a third sub-picture group 570 (FIG 5(d)). Note that the sub-picture groups 550, 560, 570 are not rectangular and, therefore, a rectangular region occupied by each of the sub-picture groups will contain content of sub-pictures of other sub-picture groups. Moreover, sub-pictures may be non-overlapping but also could overlap, in which case metadata 260 may also be provided on how the overlapping process should be performed (e.g. using linear or non-linear weighted averaging, with an appropriate predetermined or indicated set of weights).

An exemplary syntax for metadata 200 (FIG. 2) is provided below: 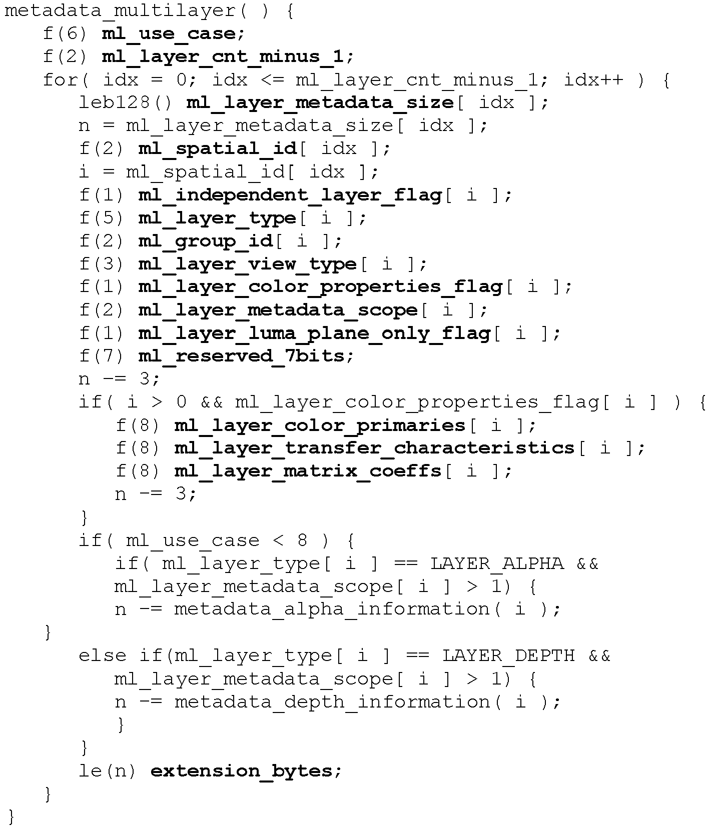 Here, the example is shown in context of the AOMedia Video 1 (AV1) video coding specification.

In this example up to 4 possible layers are supported and these layers could be assigned for a variety of applications, including multi-view coding, quality/SNR scalability, spatial scalability, or for indicating a sub-picture (as is relevant for this disclosure). When the layer is indicated as a sub-picture layer, specific information about the sub-picture size and its placement is provided in the metadata 220. In an alternative embodiment, metadata 260 first may specify the number of sub-pictures present in the bitstream, associate the sub-pictures with one or more layer ids (especially if SNR or spatial scalability is also supported for a sub-picture), and provide resolution and placement information, either explicitly (by, for example, providing coordinates and size specified for each sub-picture independently) or in common (e.g. specify a fixed grid based on the number of sub-pictures or based on a number of horizontal, i.e. N, and vertical partitions, i.e. M, that will then result in NxM sub-partitions).

Sub-pictures may be signaled in a variety of ways. When the principles of the present disclosure are applied to coding systems that do not natively support specification of sub-pictures (for example, those in force prior to the advent of this proposal), a side metadata signaling approach such as SEIs or metadata OBUs may be applied to provide the metadata 220. The side metadata may provide rendering context for coded information that is contained in coded layers provided according to the coding system's specification. If/when the techniques are adopted for a new coder so that sub-picture support can be provided natively, sub-picture signaling can be applied to high level syntax design (e.g. inside configuration structures such as the parameter sets or in the structures such as visual usability information, etc.).

Based on the example in [0025], an exemplary signaling for sub-pictures can be added to a metadata_multilayer metadata OBU proposed for AOM for AV1 multi-layer extension. An AOM proposal CWG-E050¹ defined an element, called *ml_use_case,* that signals the application scenario and also signals the type of each layer using the *ml_layer_type.* The proposal also defines 7 reserved bits *ml_reserved* bits that can be used for explicit signaling of the sub-picture related information. The principles of the present disclosure may be applied to support sub-picture representations as follows.
¹ Available at https://groups.aomedia.org/g/wg-codec/files/InputDocuments/E2024/CWG-E050/ at the time of this writing.
- The *ml_use_case* element may use a range of values to identify a use case for sub-picture representations, for example, to identify that uniformly-sized sub-pictures are being defined or that flexibly-sized partitions are being defined, whether sub-pictures overlap or not, and/or whether sub-pictures are grouped with other sub-pictures;
- Alternatively, the *ml_use_case* element may define new global values for sub-picture signaling outside the layer for loop;
- Define additional layer types in *ml_layer_type*;
- Provide explicit signaling using *ml_reserved* bits;

Example signaling usage for the *ml_use_case* element to signal the type of partitioning and a few other global parameters follows: 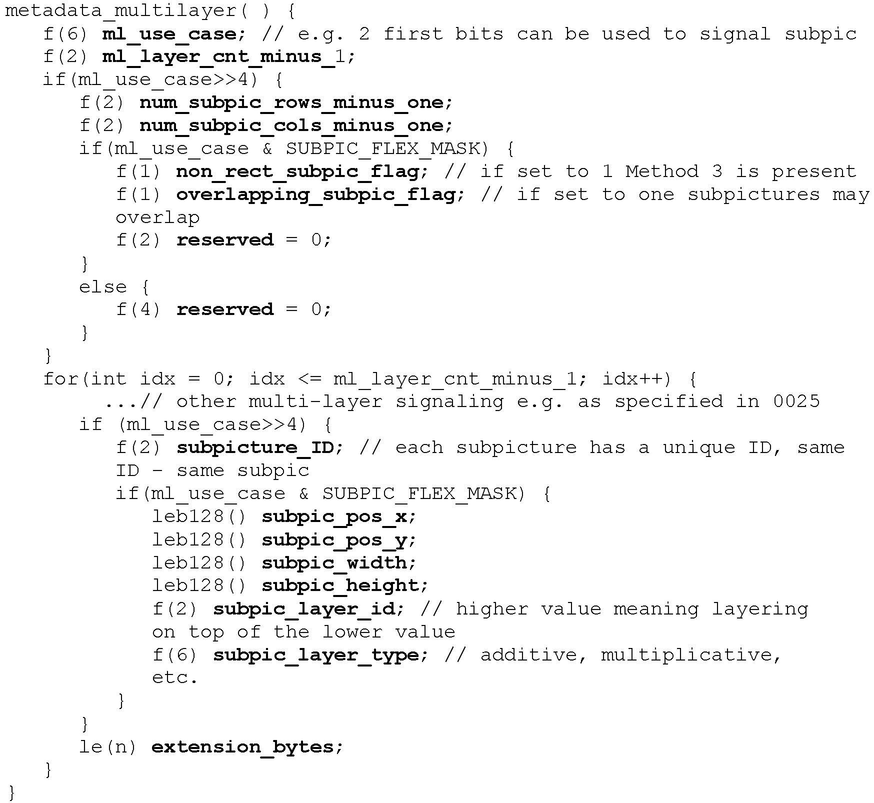 Again, the example is shown in context of the AV1 video coding specification.

In the foregoing example, the ml_use_case element may be used to identify a type of sub-picture being defined, for example, the first two bits of the ml_use_case can be used to identify the type of the subpicture layout type. E.g. as equally-sized (by using the bitmask SUBPIC_EQUISIZED_MASK) or flexibly-sized (by using the SUBPIC_FLEX_MASK). In either case, the metadata may define a number of sub-picture rows (num_subpic_rows_minus_one) and sub-picture columns (num_subpic_cols_minus_one), and it may indicate whether sub-pictures are non-rectangular or not (non_rect_subpic_flag) and whether sub-pictures may overlap or not (overlapping_subpic_flag). These elements may be defined for an entire frame. Alternatively, the elements may be defined for a sequence of frames and persist throughout the sequence.

The metadata also may provide, for each sub-picture, the sub-picture's identifier (subpicture_ID) and, in the case of flexibly-sized sub-pictures, the sub-picture's position (subpic_pos_x, subpic_pos_y) and size (subpic_width, subpic_height), the sub-picture's layer (subpic_layer_id), which may determine priority between sub-pictures that overlap each other, and method(s) (subpic_layer_type) that determine how overlapping content interacts with each other.

At a decoder or during transmission, a decoder may analyze metadata to determine how to use the sub-picture layers. In some rendering applications, for example, a decoder may determine that only certain sub-picture layers are needed, while others could be discarded or provided at lower quality or resolution. Omitting non-essential sub-pictures or downloading lower-quality sub-pictures can save a considerable amount of bitrate as well as processing and power resources at the decoder since lesser information will be transmitted, decoded, and reconstructed/processed. Depending on what information has been transmitted and decoded, the decoder may also select an appropriate method for combining the decoded samples for display.

The sub-picture representation techniques described herein provide an advantage that sub-picture indication is now at a very high level in a coding syntax, i.e. at the NAL unit or OBU header, making it easier for a decoder to extract only the layers/sub-pictures needed for an application without having (or by having less) to parse information from a lower layer. This can make the parsing process much friendlier, faster, and more cost effective than what is possible currently in other designs that employ sub-pictures, such as in the Versatile Video Coding (VVC) design.

Sub-picture indications may benefit from use of other types of metadata such as sub-picture quality and complexity information, processing/enhancement information, HDR related metadata for display management, etc. Such information could be indicated jointly for all or some sub-picture combinations, or could also be provided only for individual sub-pictures. Such metadata, regardless of whether they are group based or individual sub-picture metadata could also specify relationships between other sub-picture groups or sub-pictures, which may assist decoders on how to process and/or render the sub-pictures (e.g. relationship of a sub-picture or group with other sub-pictures, blending information as discussed earlier, etc.).

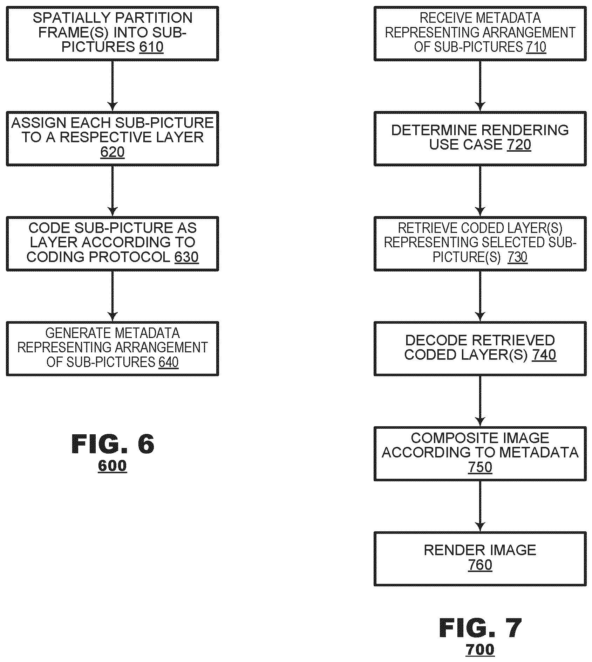

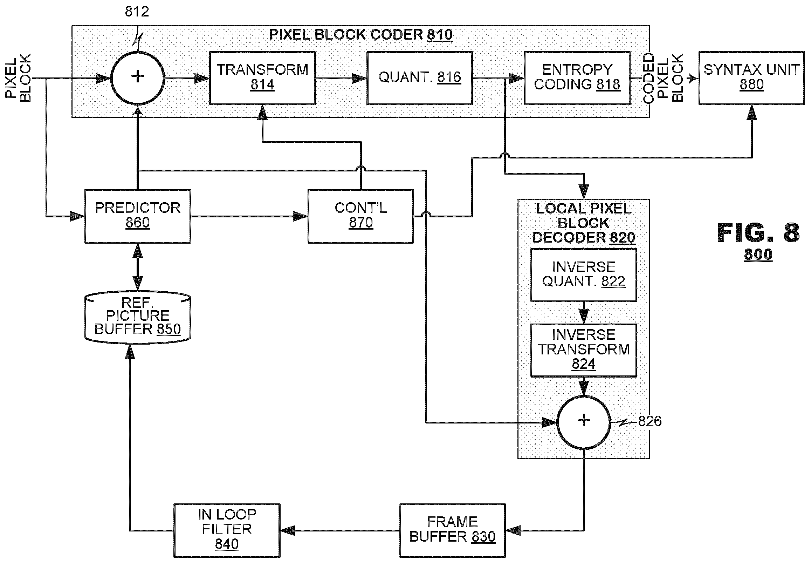

FIG. 6 illustrates a method 600 according to an embodiment of the present disclosure. The method may be operable in an encoder (FIG. 1, 8) operating according to the present disclosure. According to the method 600, input frame(s) of video may be partitioned spatially into sub-pictures (box 610). The method 600 may assign each sub-picture to a respective layer of a governing coding protocol and syntax (box 620). The method 600 may code each sub-picture, so assigned, according to the coding protocol, treating the sub-picture as a layer according to the coding protocol(box 630). Further, the method 600 may generate metadata representing an arrangement of the sub-pictures and their relationship to the coded layer data (box 640). Alternatively, or in addition, the method may generate high-level syntax signaling that identifies the sub-pictures.

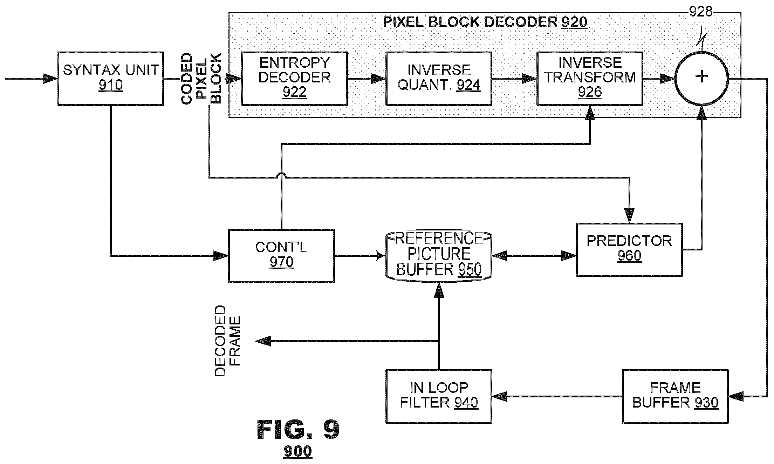

FIG. 7 illustrates a method 700 according to an embodiment of the present disclosure. The method may be operable in a decoder (FIGS. 1, 9) operating according to the present disclosure. The method 700 may begin with reception of metadata representing an arrangement of sub-pictures within coded video data (box 710). Alternatively, or in addition, the method may receive high-level syntax signaling that identifies the sub-pictures. The method 700 may determine, from the received metadata, a rendering use case relating to the sub-picture (box 720). The method 700 may retrieve coded layer(s) that are related to sub-picture(s) to be decoded at the decoder (box 730). The method 700 may decode the coded video data of the retrieved layers (box 740) and generate a composite image that arranges the decoded sub-picture data as indicated in the metadata (box 750). Thereafter, the method 700 may render the image so generated (box 760).

FIG. 8 is a functional block diagram of a coding system 800 according to an aspect of the present disclosure. The system 800 may find application as a video encoder 112, 124 (FIG. 1) for exchange of coded video. The system 800 may include a coding block coder 810, a local pixel block decoder 820, a frame buffer 830, an in loop filter system 840, reference picture buffer 850, a predictor 860, a controller 870, and a syntax unit 880. The coding system 800 may code input coding blocks differentially according to predictive techniques. Thus, a frame of video to be coded may be parsed into coding blocks, which the coding block encoder 810 processes on a coding block-by-coding block basis. The coding block coder 810 may present coded coding block data to the syntax unit 880, which formats the coded coding block data into a transmission syntax that conforms to a governing coding protocol.

The local pixel block decoder 820 may decode the coded coding block data, generating decoded coding block data therefrom. The frame buffer 830 may generate reconstructed frame data from the decoded coding block data. The in-loop filter 840 may perform one or more filtering operations on the reconstructed frame. For example, the in-loop filter 840 may perform deblocking filtering, sample adaptive offset (SAO) filtering, adaptive loop filtering (ALF), maximum likelihood (ML) based filtering schemes, deringing, debanding, sharpening, resolution scaling, and the like. Filtered frames may be stored in a reference picture buffer 850 where they may be used as a source of prediction of later-received frames and coding blocks.

The coding block coder 810 may include a subtractor 812, a transform unit 810, a quantizer 816, and an entropy coder 810. The coding block coder 810 may accept coding blocks of input data at the subtractor 812. The subtractor 812 may receive predicted coding blocks from the predictor 860 and generate an array of pixel residuals therefrom representing a difference between the input coding block and the predicted coding block. The transform unit 810 may apply a transform to the sample data output from the subtractor 812, to convert data from the pixel domain to a domain of transform coefficients. In some scenarios (for example, when operating on high dynamic range content) prior to transform unit 810 and/or subtractor 812, the input may be reshaped, or an adaptation scheme be applied to adjust to the content transfer characteristics. Such an adaption can be either a simple scaling, based on a re-mapping function, or a more sophisticated pixel manipulation technique. The quantizer 816 may perform quantization of transform coefficients output by the transform unit 810 according to a quantization parameter qp. The quantizer 816 may apply either uniform or non-uniform quantization parameters; non-uniform quantization parameters may vary across predetermined locations of the block of coefficients output from the transform unit 810. The entropy coder 810 may reduce bandwidth of the output of the coefficient quantizer by coding the output, for example, by variable length code words or using a context adaptive binary arithmetic coder.

The transform unit 810 may operate in a variety of transform modes as determined by the controller 870. The controller 870 may select one of the transforms described hereinabove according to the controller's determination of coding efficiencies that will be obtained from the selected transform. Once the transform to be used for coding is selected, the controller 870 may determine whether it is necessary to signal its selection of the transform and, if so, how to signal such selection, using the techniques described hereinabove.

The quantizer 816 may operate according to a quantization parameter qp that is determined by the controller 870. Techniques for developing the quantization parameter are discussed hereinbelow. The controller 870 may provide data to the syntax unit 880 representing its quantization parameter selections.

The entropy coder 810, as its name implies, may perform entropy coding of data output from the quantizer 816. For example, the entropy coder 810 may perform run length coding, Huffman coding, Golomb coding, Context Adaptive Binary or Multisymbol Arithmetic Coding, and the like. Following entropy coding, an encoder may determine the EOB for use in determining whether and how to signal transform types as discussed hereinabove.

The local pixel block decoder 820 may invert coding operations of the coding block coder 810. For example, the local pixel block decoder 820 may include a dequantizer 822, an inverse transform unit 824, and an adder 826. In some scenarios (for example, when operating on high dynamic range content) post to inverse transform unit 824 and/or adder 826, the input may be inverse reshaped or re-mapped typically according to a function that was applied at the encoder and content characteristics. The local pixel block decoder 820 may take its input data from an output of the quantizer 816. Although permissible, the local pixel block decoder 820 need not perform entropy decoding of entropy-coded data since entropy coding is a lossless event. The dequantizer 822 may invert operations of the quantizer 816 of the coding block coder 810. The dequantizer 822 may perform uniform or non-uniform de-quantization as specified by the quantization parameter data qp. Similarly, the inverse transform unit 824 may invert operations of the transform unit 810. The dequantizer 822 and the inverse transform unit 824 may use the same quantization parameters qp and transform modes as their counterparts in the coding block coder 810. Quantization operations likely will truncate data in various respects and, therefore, data recovered by the dequantizer 822 likely will possess coding errors when compared to the data presented to the quantizer 816 in the coding block coder 810.

The adder 826 may invert operations performed by the subtractor 812. It may receive the same prediction coding block from the predictor 860 that the subtractor 812 used in generating residual signals. The adder 826 may add the prediction coding block to reconstructed residual values output by the inverse transform unit 824 and may output reconstructed coding block data.

As described, the frame buffer 830 may assemble a reconstructed frame from the output of the local pixel block decoder 820. The in-loop filter 840 may perform various filtering operations on recovered coding block data. For example, the in-loop filter 840 may include a deblocking filter, a sample adaptive offset ("SAO") filter, and/or other types of in loop filters (not shown). The reference picture buffer 850 may store filtered frame data output by the in-loop filter 840 for use in later prediction of other coding blocks.

Different types of prediction data are made available to the predictor 860 for different prediction modes. For example, for an input coding block, intra prediction takes a prediction reference from decoded data of the same frame in which the input coding block is located. Thus, the reference frame store 850 may store decoded coding block data of each frame as it is coded. For the same input coding block, inter prediction may take a prediction reference from previously coded and decoded frame(s) that are designated as reference frames. Thus, the reference frame store 850 may store these decoded reference frames.

The predictor 860 may supply prediction blocks to the coding block coder 810 for use in generating residuals. The predictor 860 may perform prediction search operations according to intra mode coding, and uni-predictive, bi-predictive, and/or multi-hypothesis inter mode coding. For intra mode coding, the predictor 860 may search from among coding block data from the same frame as the coding block being coded that provides the closest match to the input coding block. For inter mode coding, the predictor 860 may search from among coding block data of other previously coded frames stored in the reference picture buffer 850 that provides a match to the input coding block. From among the predictions generated according to the various modes, the predictor 860 may select a mode that achieves the lowest distortion when video is decoded given a target bitrate. Exceptions may arise when coding modes are selected to satisfy other policies to which the coding system 800 adheres, such as satisfying a particular channel behavior, or supporting random access or data refresh policies.

The controller 870 may control overall operation of the coding system 800. The controller 870 may select operational parameters for the coding block coder 810 and the predictor 860 based on analyses of input coding blocks and also external constraints, such as coding bitrate targets and other operational parameters. The controller 870 may determine how to represent those selections in coded video data that is output from the system 800. The controller 870 also may select between different modes of operation by which the system may generate reference images and may include metadata identifying the modes selected for each portion of coded data.

During operation, the controller 870 may revise operational parameters of the quantizer 816 and the transform unit 815 at different granularities of image data, either on a per coding block basis or on a larger granularity (for example, per frame, per slice, per largest coding unit ("LCU") or Coding Tree Unit (CTU), or another region). In an aspect, the quantization parameters may be revised on a per-pixel basis within a coded frame.

Additionally, as discussed, the controller 870 may control operation of the in-loop filter 850 and the prediction unit 860. Such control may include, for the prediction unit 860, mode selection (lambda, modes to be tested, search windows, distortion strategies, etc.), and, for the in-loop filter 850, selection of filter parameters, reordering parameters, weighted prediction, etc.

FIG. 9 is a functional block diagram of a decoding system 900 according to an aspect of the present disclosure. The decoding system 900 may find application as a video decoder 122, 114 (FIG. 1) for exchange of coded video. The decoding system 900 may include a syntax unit 910, a coding block decoder 920, a frame buffer 930, an in-loop filter 940, a reference picture buffer 950, a predictor 960, and a controller 970.

The syntax unit 910 may receive a coded video data stream and may parse the coded data into its constituent parts. Data representing coding parameters may be furnished to the controller 970, while data representing coded residuals (the data output by the coding block coder 810 of FIG. 8) may be furnished to the coding block decoder 920. The predictor 960 may generate a prediction block from reference frame data available in the reference picture buffer 950 as determined by coding parameter data provided in the coded video. The predictor 960 may supply the prediction block to the coding block decoder 920.

The coding block decoder 920 may invert coding operations applied by the coding block coder 810 (FIG. 8). The frame buffer 930 may create a reconstructed frame from decoded coding blocks output by the coding block decoder 920. The in-loop filter 940 may filter the reconstructed frame data. The filtered frames may be output from the decoding system 900. Filtered frames that are designated to serve as reference frames also may be stored in the reference picture buffer 950.

The coding block decoder 920 may include an entropy decoder 922, a dequantizer 924, an inverse transform unit 926, and an adder 928. The entropy decoder 922 may perform entropy decoding to invert processes performed by the entropy coder 810 (FIG. The dequantizer 924 may invert operations of the quantizer 816 of the coding block coder 810 (FIG. 8). Similarly, the inverse transform unit 926 may invert operations of the transform unit 810 (FIG. 8). They may use the quantization parameters and transform modes that are identified by the encoder either expressly or impliedly. Because quantization is likely to truncate data, the coding blocks recovered by the dequantizer 924 likely will possess coding errors when compared to the input coding blocks s presented to the coding block coder 810 of the encoder (FIG. 8).

The adder 928 may invert operations performed by the subtractor 810 (FIG. 8). It may receive a prediction coding block from the predictor 960 as determined by prediction references in the coded video data stream. The adder 928 may add the prediction coding block to reconstructed residual values output by the inverse transform unit 926 and may output reconstructed coding block data.

As described, the frame buffer 930 may assemble a reconstructed frame from the output of the coding block decoder 920. The in-loop filter 940 may perform various filtering operations on recovered coding block data as identified by the coded video data. For example, the in-loop filter 940 may include a deblocking filter, a sample adaptive offset ("SAO") filter, and/or other types of in loop filters. In this manner, operation of the frame buffer 930 and the in loop filter 940 mimic operation of the counterpart frame buffer 830 and in loop filter 840 of the encoder 800 (FIG. 8).

The reference picture buffer 950 may store filtered frame data for use in later prediction of other coding blocks. The reference picture buffer 950 may store decoded frames as it is coded for use in intra prediction. The reference picture buffer 950 also may store decoded reference frames.

As discussed, the predictor 960 may supply the prediction blocks to the coding block decoder 920 according to a coding mode identified in the coded video data. The predictor 960 may supply predicted coding block data as determined by the prediction reference indicators supplied in the coded video data stream.

The controller 970 may control overall operation of the coding system 900. The controller 970 may set operational parameters for the coding block decoder 920 and the predictor 960 based on parameters received in the coded video data stream. As is relevant to the present discussion, these operational parameters may include quantization parameters for the dequantizer 924 and transform modes for the inverse transform unit 910. As discussed, the received parameters may be set at various granularities of image data, for example, on a per coding block basis, a per frame basis, a per slice basis, a per LCU/CTU basis, or based on other types of regions defined for the input image.

The foregoing discussion has described operation of the aspects of the present disclosure in the context of video coders and decoders. Commonly, these components are provided as electronic devices. Video decoders and/or controllers can be embodied in integrated circuits, such as application specific integrated circuits, field programmable gate arrays, and/or digital signal processors. Alternatively, they can be embodied in computer programs that execute on camera devices, personal computers, notebook computers, tablet computers, smartphones, or computer servers. Such computer programs typically are stored in physical storage media such as electronic-, magnetic-, and/or optically-based storage devices, where they are read to a processor and executed. Decoders commonly are packaged in consumer electronics devices, such as smartphones, tablet computers, gaming systems, DVD players, portable media players and the like; and they also can be packaged in consumer software applications such as video games, media players, media editors, and the like. And, of course, these components may be provided as hybrid systems that distribute functionality across dedicated hardware components and programmed general-purpose processors, as desired.

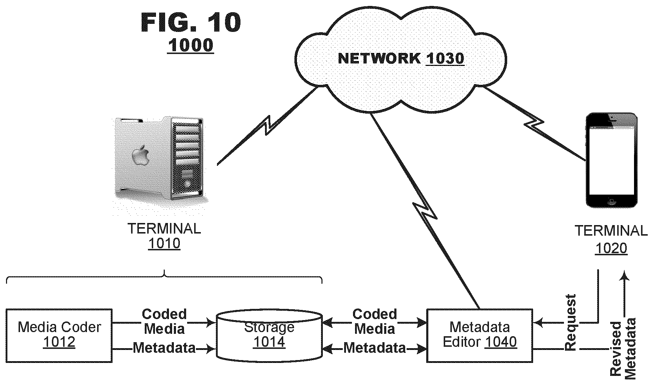

FIG. 10 illustrates a system 1000 according to another embodiment of the present disclosure. As illustrated, the system 1000 may include a plurality of terminals 1010, 1020 provided in communication via a network 1030. The system 1000 also may include a metadata editor 1040 also provided in communication with the terminals 1010, 1020 via the network 1030.

The terminals 1010, 1020 may operate as described in the foregoing embodiments to exchange coded media of sub-pictures coded as layers according to a governing coding specification. Thus, as illustrated in FIG. 10, a first terminal 1010 may include a media coder 1012 that generates coded media and metadata. The first terminal 1010 also may possess storage that stores the coded media and metadata for retrieval and consumption by the second terminal 1020.

The system 1000 may possess a metadata editor 1040 that responds to requests from the second terminal for coded media. Although the media editor 1040 is shown in FIG. 10 as a stand-alone device, the principles of the present disclosure also find application with embodiments that integrate the metadata editor 1040 into a source terminal 1010 that makes coded media available to other terminals.

According to an embodiment of the disclosure, the metadata editor 1040 may revise metadata generated by a media encoder 1012 based on information known about a second terminal 1020 that is accessing the coded media. The metadata editor 1040 may perform revision operations in response to a request received from the second terminal 1020 that attempts to access coded media and, by extension, sub-picture metadata. When such an access occurs, the metadata editor 1040 may retrieve metadata of the coded media and filter out portion(s) of the metadata that are inappropriate for access by the second terminal 1020. For example, the metadata editor 1040 may discard metadata information relating to layers that the second terminal 1020 will not access. Filtering operations may be based on information that the metadata editor acquires about the second terminal 1020, such as features of the second terminal 1020 or the second terminal's network access. For example, for a second terminal 1020 that can display only SDR (standard dynamic range) video, the metadata editor 1040 may discard portions of metadata relating to coded layers for HDR content that the SDR second terminal 1020 cannot display. As another example, for a second terminal 1020 that accesses the network 1030 through a bandwidth-limited channel, the metadata editor 1040 may discard portions of metadata relating to coded layers that require connection bandwidth in excess of the second terminal's connection limits. The metadata editor 1040 may generate revised metadata based on portion(s) of source metadata that the metadata editor 1040 determines are appropriate to the second terminal 1020 and may provide the revised metadata to the second terminal 1020 in response to the terminal's request.

Several embodiments of the present invention are specifically illustrated and described herein. However, it will be appreciated that modifications and variations of the present invention are covered by the above teachings and within the purview of the appended claims without departing from the spirit and intended scope of the invention.

Exemplary methods are set out in the following items.
1. A media coding method, comprising:
   spatially partitioning a frame of source media into sub-pictures,
   assigning a plurality of the sub-pictures to respective layers of a coding protocol,
   coding the sub-pictures in each layer according to its coding protocol,
   generating metadata identifying an arrangement of sub-pictures in the source frame, and
   transmitting the coded layer data and the metadata to a decoder.
2. The method of item 1, wherein the metadata relates the sub-pictures to the layers to which they are assigned.
3. The method of item 1, wherein the metadata provides an identifier of each coded sub-picture.
4. The method of item 1, wherein the metadata identifies the sizes of the sub-pictures.
5. The method of item 4, wherein, when the sizes of the sub-pictures are uniform, the size information is a global variable applicable to all coded sub-pictures.
6. The method of item 4, wherein, when the sizes of the sub-pictures are non-uniform, the metadata contains size information individually for the coded sub-pictures.
7. The method of item 1, wherein the metadata identifies relative positions of the sub-pictures.
8. The method of item 1, wherein the metadata contains a group identifier identifying sub-pictures that are to be grouped together.
9. The method of item 1, wherein the metadata contains an identifier indicating whether a sub-picture has a non-rectangular shape.
10. The method of item 1, wherein the metadata contains an identifier indicating whether a sub-picture overlaps with another sub-picture.
11. The method of item 1, wherein the metadata contains a priority identifier identifying relative priority of two sub-pictures with respect to each other.
12. The method of item 1, wherein the coding protocol employs pixel-block based coding techniques.
13. The method of item 1, wherein the coding protocol employs point cloud-based coding techniques.
14. The method of item 1, wherein the coding protocol employs mesh-based coding techniques.
15. The method of item 1, wherein the coding protocol employs volumetric-based coding techniques.
16. The method of item 1, further comprising, before the transmitting, revising the metadata based on information known about the decoder, wherein the transmitting transmits the revised metadata.
17. The method of item 1, wherein the metadata is provided in a Supplemental Enhancement Information (SEI) message and has a syntax that is not defined in the coding protocol.
18. The method of item 1, wherein the metadata is provided in an Open Bitstream Unit (OBUs) element and has a syntax that is not defined in the coding protocol.
19. A media decoding method, comprising responsive to metadata identifying a relationship between coded layer data in coded media data and sub-pictures to be generated therefrom:
   determining sub-picture(s) to be rendered from the coded media data,
   retrieving coded sub-picture data corresponding to the sub-pictures as represented in the metadata, the sub-picture data represented in coded layer elements according to a coding protocol of the coded media data;
   decoding the coded sub-picture data according to decode processes defined by the coding protocol for coded layers,
   generating composite decoded image(s) according to spatial relationships defined I the metadata.
20. The method of item 19, wherein the metadata relates the sub-pictures to the layers to which they are assigned.
21. The method of item 19, wherein the metadata provides an identifier of each coded sub-picture.
22. The method of item 19, wherein the metadata identifies the sizes of the sub-pictures.
23. The method of item 22, wherein, when the sizes of the sub-pictures are uniform, the size information is a global variable applicable to all coded sub-pictures.
24. The method of item 22, wherein, when the sizes of the sub-pictures are non-uniform, the metadata contains size information individually for the coded sub-pictures.
25. The method of item 19, wherein the metadata identifies relative positions of the sub-pictures.
26. The method of item 19, wherein the metadata contains a group identifier identifying sub-pictures that are to be grouped together.
27. The method of item 19, wherein the metadata contains an identifier indicating whether a sub-picture has a non-rectangular shape.
28. The method of item 19, wherein the metadata contains an identifier indicating whether a sub-picture overlaps with another sub-picture.
29. The method of item 19, wherein the metadata contains a priority identifier identifying relative priority of two sub-pictures with respect to each other.
30. The method of item 19, wherein the metadata is provided in a Supplemental Enhancement Information (SEI) message and has a syntax that is not defined in the coding protocol.
31. The method of item 19, wherein the metadata is provided in an Open Bitstream Unit (OBUs) element and has a syntax that is not defined in the coding protocol.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A media coding method, comprising:
spatially partitioning a frame of source media into sub-pictures,
assigning a plurality of the sub-pictures to respective layers of a coding protocol,
coding the sub-pictures in each layer according to its coding protocol,
generating metadata identifying an arrangement of sub-pictures in the source frame, and
transmitting the coded layer data and the metadata to a decoder.

2. The method of claim 1, wherein the metadata relates the sub-pictures to the layers to which they are assigned.

3. The method of any of the preceding claims, wherein the metadata provides an identifier of each coded sub-picture.

4. The method of any of the preceding claims, wherein the metadata identifies the sizes of the sub-pictures.

5. The method of claim 4, wherein, when the sizes of the sub-pictures are uniform, the size information is a global variable applicable to all coded sub-pictures.

6. The method of claim 4, wherein, when the sizes of the sub-pictures are non-uniform, the metadata contains size information individually for the coded sub-pictures.

7. The method of any of the preceding claims, wherein the metadata identifies relative positions of the sub-pictures.

8. The method of any of the preceding claims, wherein the metadata contains a group identifier identifying sub-pictures that are to be grouped together.

9. The method of any of the preceding claims, wherein the metadata contains an identifier indicating whether a sub-picture has a non-rectangular shape.

10. The method of any of the preceding claims, wherein the metadata contains an identifier indicating whether a sub-picture overlaps with another sub-picture.

11. The method of any of the preceding claims, wherein the metadata contains a priority identifier identifying relative priority of two sub-pictures with respect to each other.

12. The method of any of the preceding claims, wherein the coding protocol employs pixel-block based coding techniques, and/or wherein the coding protocol employs point cloud-based coding techniques, and/or wherein the coding protocol employs mesh-based coding techniques, and/or wherein the coding protocol employs volumetric-based coding techniques.

13. The method of any of the preceding claims, further comprising, before the transmitting, revising the metadata based on information known about the decoder, wherein the transmitting transmits the revised metadata.

14. The method of any of the preceding claims, wherein the metadata is provided in a Supplemental Enhancement Information (SEI) message and has a syntax that is not defined in the coding protocol, and/or wherein the metadata is provided in an Open Bitstream Unit (OBUs) element and has a syntax that is not defined in the coding protocol.

15. A media decoding method, comprising responsive to metadata identifying a relationship between coded layer data in coded media data and sub-pictures to be generated therefrom:
determining sub-picture(s) to be rendered from the coded media data,
retrieving coded sub-picture data corresponding to the sub-pictures as represented in the metadata, the sub-picture data represented in coded layer elements according to a coding protocol of the coded media data;
decoding the coded sub-picture data according to decode processes defined by the coding protocol for coded layers,
generating composite decoded image(s) according to spatial relationships defined I the metadata.
